# EUROPEAN PATENT APPLICATION

(11) **EP 2 679 365 A1**
(43) Date of publication of application: **01.01.2014**
(21) Application number: 12749324.5
(22) Date of filing: 30.01.2012
(51) Int. Cl.: B29B 11/16

(54) **METHOD FOR MANUFACTURING PREFORM**

(30) Priority: 21.02.2011 JP 2011034954
(71) Applicant: Toray Industries, Inc., Tokyo, 103-8666 (JP)
(72) Inventor: YAMASAKI Masaaki, Nagoya-shi Aichi 455-8502 (JP); KIBE Ryuzo, Nagoya-shi Aichi 455-8502 (JP)
(74) Representative: Hoefer & Partner
(86) International application number: PCT/JP2012/051913
(87) International publication number: WO 2012/114828

(57) **Abstract**

A method for manufacturing a preform, wherein a sheet-shaped structure made of a reinforcing-fiber base material with reinforcing fibers arranged in a predetermined direction is formed into a shape along a lower mold having a three-dimensional shape with a recessed section by using the lower mold and a plurality of upper molds each having a pressing mechanism, characterized in that the sheet-shaped structure is placed on the lower mold while at least one spot in the sheet-shaped structure is temporarily pressed with at least one of the upper molds, and at least one spot other than the temporarily pressed spot in the sheet-shaped structure is pressed with another upper mold, and then a spot which is neither the temporarily pressed spot nor the pressed spot is pressed with yet another upper mold, and the spot which has been temporarily pressed with the upper mold is actually pressed by a predetermined pressing force. According to this manufacturing method, when a sheet-shaped structure produced from a reinforcing-fiber base material is formed into a three-dimensional shape, the base material is prevented from becoming wrinkled, and a preform having a target shape can be formed efficiently with high productivity.

## Description

### Technical Field of the Invention

The present invention relates to a method for manufacturing a preform, and specifically relates to a method for manufacturing a preform wherein a sheet-shaped structure made of reinforcing-fiber base material can be formed into a wrinkle-free three-dimensional shape by using a lower mold and upper molds.

### Background Art of the Invention

In the RTM (Resin Transfer Molding) forming method, it is usual that reinforcing-fiber base material is formed into a predetermined shape to impregnate a formed preform with resin before impregnating the reinforcing-fiber base material with matrix resin. Such a preform of the reinforcing-fiber base material has each required shape depending on a shape of a final product to be formed. If a sheet-shaped structure made of the reinforcing-fiber base material is formed into a preform with a predetermined complicated shape, defects such as wrinkling should be prevented.

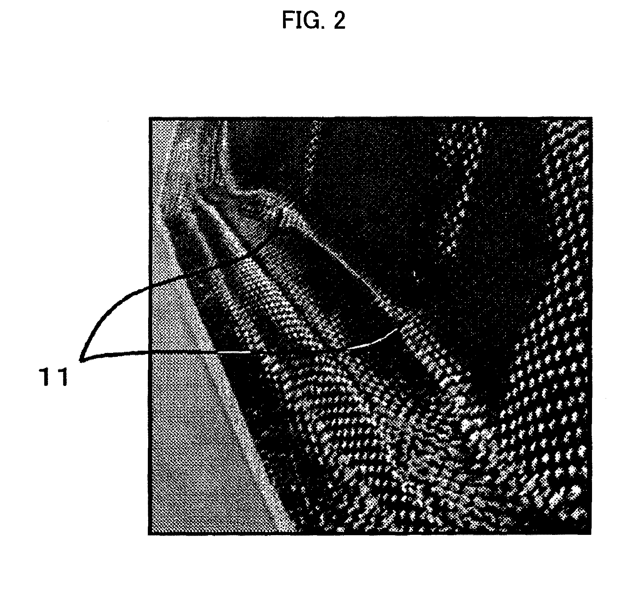

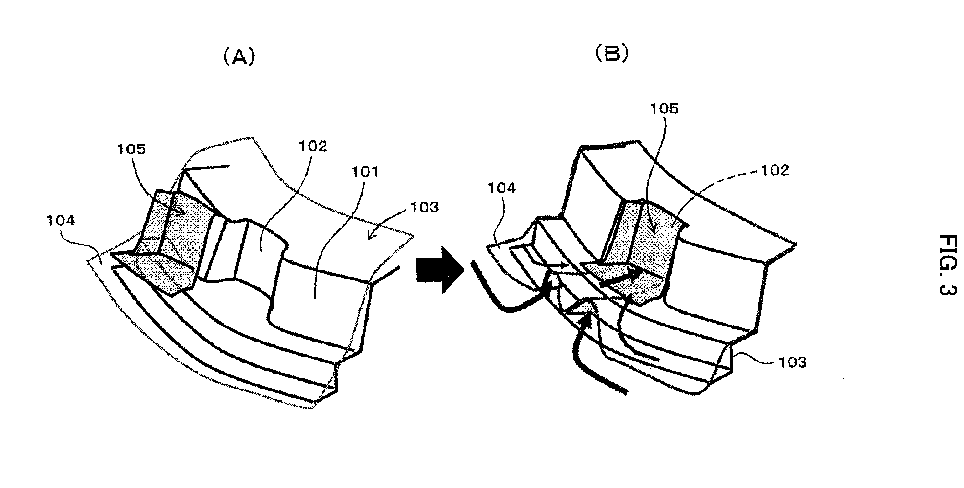

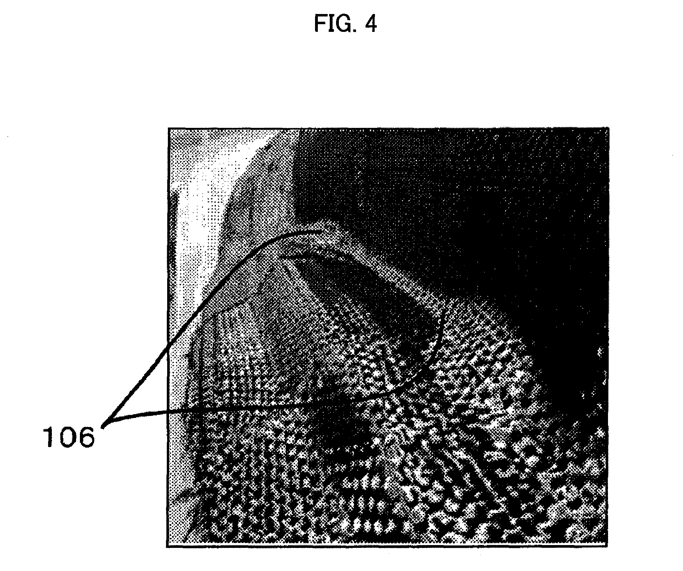

Fig. 3 discloses a conventional general method for forming a preform with a comparatively complicated shape. Fig. 3 (A) shows a process where sheet-shaped structure 104 is formed along the three-dimensional shape of lower mold 103 having recessed section 102 in curved surface 101 from the fiber-reinforcing base material. As shown in Fig. 3 (B), if upper mold 105 is merely pressed toward sheet-shaped structure 104 located on recessed section 102, sheet-shaped structure 104 located around recessed section 102 is pulled in toward recessed section 102 (as illustrated by arrows) at the time when upper mold 105 is pressed toward sheet-shaped structure 104, so as to cause undesirable crinkle or deformation around recessed section 102. Particularly, when upper mold 105 is pulled in to the inside of recessed section 102, sheet-shaped structure 104 located around recessed section 102 is raised more or less, so as to cause undesirable wrinkles on sheet-shaped structure 104 located around recessed section 102. Fig. 4 shows an example of undesirable raise deformation 106, as a comparison chart to Fig. 2 showing results of the present invention.

Separately from the above-described general method, Patent document 1 discloses a modified method for forming a predetermined sheet-shaped structure made of reinforcing-fiber base material. The method is such that a sheet-shaped structure with reinforcing fibers arranged in a predetermined direction is gripped with clamping equipments having a predetermined mold face by at least two spots, and the sheet-shaped structure is pressed by a presser having a predetermined pressing face between the gripping spots while at least one of the clamping equipments is shifted to narrow the interval of the gripping spots of the sheet-shaped structure, so that the sheet-shaped structure is deformed along the pressing face of the presser and is pressed by the pressing face of the presser and the mold face of the clamping equipment.

### Prior art documents

### Patent documents

Patent document 1: JP-4492457-B

### Summary of the Invention

### Problems to be solved by the Invention

The forming method of sheet-shaped structure disclosed in Patent document 1 can only be applied to forming a shape substantively made from simple two-dimensional cross section, which can be formed by narrowing the interval of the gripping spots, and therefore it is very difficult for complicated shapes such as three-dimensional shape as shown in Fig. 3 to be formed. Further, because the sheet-shaped structure is gripped with the clamping equipments firmly by at least two spots, the above-described peripheral raise deformation might cause undesirable wrinkle accompanied by the deformation at the time when the section between gripping spots is pressed. Furthermore, the yield ratio of the reinforcing-fiber base material as material of the sheet-shaped structure might worsen, because the periphery around a spot to be formed into a three-dimensional shape should be provided with a section gripped with the clamping equipment and is formed into a shape capable of keeping the grip independently from final products and therefore the gripped section must be designed to position outside the products.

Accordingly, an object of the present invention is to provide a method for manufacturing a preform, wherein a sheet-shaped structure made of a reinforcing-fiber base material can be formed into a target three-dimensional shaped preform with a high yield wrinkle-free base material efficiently in a high productivity.

### Means for solving the Problems

To achieve the above-described object, a method for manufacturing a preform according to the present invention is a method for manufacturing a preform, wherein a sheet-shaped structure made of a reinforcing-fiber base material with reinforcing fibers arranged in a predetermined direction is formed into a shape along a lower mold having a three-dimensional shape with a recessed section by using the lower mold and a plurality of upper molds each having a pressing mechanism, characterized in that the sheet-shaped structure is placed on the lower mold while at least one spot in the sheet-shaped structure is temporarily pressed with at least one of the upper molds, and at least one spot other than the temporarily pressed spot in the sheet-shaped structure is pressed with another upper mold, and then a spot which is neither the temporarily pressed spot nor the pressed spot is pressed with yet another upper mold, and the spot which has been temporarily pressed with the upper mold is actually pressed by a predetermined pressing force. Here, "temporary pressing" indicates a holding condition where the sheet-shaped structure is prevented from rising from the surface of the lower mold and is allowed to shift in a direction along the surface of the lower mold.

In such a method, while the sheet-shaped structure is placed on the lower mold and at least one spot in the sheet-shaped structure is temporarily pressed, a specific spot which is a spot of the three-dimensional shape typified by the recessed section and is different from the temporarily pressed spot is pressed with another upper mold to form a target three dimensional shape. At this time, if it were merely pressed with the other upper mold, the periphery would raise as wrinkling. But actually the spot which might rise is temporarily pressed and therefore the temporarily pressed spot in the sheet-shaped structure is only allowed to displace along the surface of the lower mold (in-plane displacement is only allowed), so that the undesirable raise from the surface of the lower mold and wrinkling accompanied by the raise is prevented. Therefore, the sheet-shapes structure should only be able to allow such a displacement. And, while the forming condition in the specified spot or the pressing condition to the lower mold by the other upper mold is maintained, the other spot is pressed with yet another upper mold and the spot which has been temporarily pressed with the temporarily pressing upper mold is actually pressed by a predetermined pressing force, so that a whole part to be formed is formed into a desirable wrinkle-free shape. This method will not worsen the yield ratio of the reinforcing-fiber base material because such clamped spot as disclosed in Patent document 1 is not necessary.

In the method for manufacturing a preform according to the present invention, it is preferable that the sheet-shaped structure is temporarily pressed with said at least one of the upper molds at a periphery of the recessed section of the lower mold, for example. Because the recessed section of the lower mold is a spot having a three-dimensional shape, the raise of the base material and wrinkles are likely to be caused at the periphery around the recessed section, the effect of the present invention can be achieved efficiently if the periphery is temporarily pressed. A plurality of upper molds for the temporary pressing may be used and there may be no less than two spots to be temporarily pressed.

After the temporary pressing, it is preferable that a spot located on the recessed section of the lower mold in the sheet-shaped structure is pressed with said another upper mold. Namely as described above, the recessed section is a spot having a three-dimensional shape where the raise of the base material and wrinkles are likely to be caused at the periphery, and therefore the effect of the present invention can be achieved efficiently if the recessed section is regarded as a spot which is likely to cause the wrinkles.

Further, it is possible that the pressing force of the upper mold for the temporary pressing is controlled in two phases of the pressing force for the temporary pressing and the pressing force for the actual pressing. As described above, the pressing force for the temporary pressing may be a low pressing force enough to allow the sheet-shaped structure to shift along the surface of the lower mold (in-plane displacement is only allowed) while the pressing force for the actual pressing is required to be a high pressing force enough to press the sheet-shaped structure onto the surface of the lower mold to form it into a shape accurately along the surface of the lower mold. Such a two-phased control of the pressing force makes the operation process for the forming progress smoothly.

Furthermore, it is preferable that at least one upper mold other than the upper mold for the temporary pressing is located closely to the lower mold. It is more preferable that the upper mold other than the upper mold for the temporary pressing and the upper mold for the pressing of a specified spot, such as the recessed section, having a three-dimensional shape is located closely to the lower mold. That makes it possible that the raise is prevented by the closely located upper mold and therefore the forming is achieved more desirably as a whole, even if the base material is almost raised from the surface of the lower mold in a spot other than the temporarily pressed spot.

In the present invention, the reinforcing-fiber base material composing the sheet-shaped structure is not limited in particular, and may be unidirectional base material with reinforcing fibers oriented in a direction, unidirectional fabric base material made from unidirectionally-oriented reinforcing fibers and auxiliary fibers to hold a fabric configuration, or fabric base material with reinforcing fibers oriented in the warp and weft directions to make a fabric configuration. According to a technological concept of the present invention that the wrinkling is prevented through allowing the shift along the surface of the lower mold at the temporarily pressed spot in the forming, it is preferable that the reinforcing-fiber base material composing the sheet-shaped structure is a reinforcing-fiber fabric, which can allow a desirable shift without causing defects such as fray and ravel, even if the surface of the lower mold has a complicated three-dimensional shape.

In the present invention, the reinforcing-fiber base material composing the sheet-shaped structure may be glass fiber, carbon fiber, aramid fiber, or reinforcing fiber of hybrid configuration of them. Above all, the stiffness of the carbon fiber is too high to form along a complicated shape of the surface of the lower mold, and therefore the present invention is advantageously applied to a sheet-shaped structure made of the reinforcing-fiber base material containing the carbon fiber material.

Further, the sheet-shaped structure with the reinforcing-fiber base material is not limited in particular, and may comprise a single layer or layered body of the reinforcing-fiber base material. Preforms are often formed from layered bodies of the reinforcing-fiber base material, where the present invention can be effectively applied to make a shape by the forming.

Furthermore, the present invention is particularly advantageous in a case where the preform is used for the RTM forming method. Comparatively complicated three-dimensional shape can be formed by the RTM forming method where a preform made of reinforcing-fiber base material already formed is placed in a forming mold which is filled and impregnated with resin. Therefore, the preform before impregnating with matrix resin can be formed into a desirable wrinkle-free shape, so that final products after the impregnation and curing of resin are surely given desirable shape.

### Effect According to the Invention

Thus, the method for manufacturing a preform according to the present invention makes it possible that the sheet-shaped structure made of the reinforcing-fiber base material is easily formed into a desirable three-dimensional shape without wrinkles on the base material. Because such a spot to be clamped as disclosed in Patent document 1 is not required, the sheet-shaped structure can be efficiently used as a preform material, the yield ratio of the material increases extremely, and a preform having a target shape can be efficiently manufactured in a high productivity.

### Brief explanation of the drawings

[Fig. 1] Fig. 1 is a schematic configuration view showing a method for manufacturing a preform according to an embodiment of the present invention.
[Fig. 2] Fig. 2 is a partial perspective view showing an observation of the preform manufactured by the method shown in Fig. 1.
[Fig. 3] Fig. 3 is a schematic configuration view showing an example of conventional methods for manufacturing a preform.
[Fig. 4] Fig. 4 is a partial perspective view showing an observation of the preform manufactured by the method shown in Fig. 3.

### Embodiments for carrying out the Invention

Hereinafter, embodiments of the present invention will be explained as referring to figures.

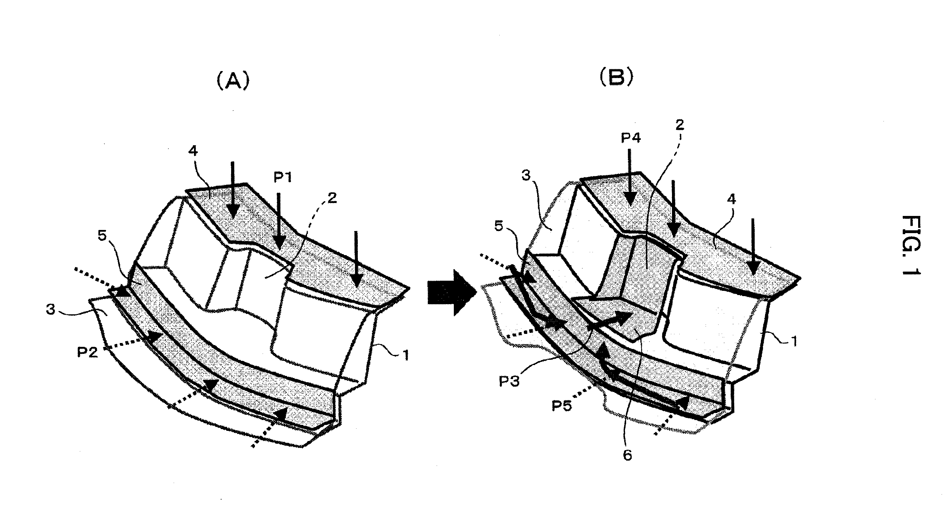

Fig. 1 is a schematic configuration view showing a method for manufacturing a preform according to an embodiment of the present invention. In Fig. 1 (A), symbol 1 indicates lower mold, which has a three-dimensional surface and recessed section 2. Sheet-shaped structure 3 made of a reinforcing-fiber base material with reinforcing fibers arranged in a predetermined direction is placed on lower mold 1 while at least one spot (may be two spots around recessed section 2 as depicted) of sheet-shaped structure 3 is temporarily pressed by using at least one upper mold, which may be two upper molds 4 and 5 depicted in Fig. 1. Such temporary pressing forces are controlled to P1 and P2 corresponding to upper molds 4 and 5 respectively. As described above, such a temporary pressing maintains a holding condition where sheet-shaped structure 3 is prevented from rising from the surface of lower mold 1 and is allowed to shift in a direction along the surface of lower mold 1.

Then as shown in Fig. 1 (B), at least one spot (may be the depicted spot corresponding to recessed section 2) other than spots temporarily pressed with upper molds 4 and 5 in sheet-shaped structure 3 is pressed with other upper mold 6 by pressing force P3 capable of forming sheet-shaped structure 3 into a shape corresponding to recessed section 2. At this time, a part of sheet-shaped structure 3, which has been temporarily pressed with upper molds 4 and 5 and which may have been temporarily pressed with upper mold 4 in particular as shown, is pulled in toward recessed section 2 in a direction shown by arrows in Fig. 1 (B) as accompanying the pressing motion of upper mold 6. Such a part is temporarily pressed with upper mold 4 and therefore is prevented from rising from the surface of lower mold 1 by the pulling in, while the shift along the surface of lower mold 1 is allowed to meet the requirement of the pulling motion. Therefore, the pressing motion of upper mold 6 can prevent sheet-shaped structure 3 around recessed section 2 from rising from the surface of lower mold 1 to cause wrinkles even if the part of sheet-shaped structure 3 is formed into a shape corresponding to recessed section 2. Besides, an appropriate spot to be temporarily pressed can be determined to a spot where the raise of sheet-shaped structure 3 and wrinkling accompanying the raise are expected. The temporary pressing is not limited to the depicted example of temporary pressing with upper molds 4 and 5.

Then a spot, which is different from the spot pressed with upper mold 6 and the spot temporarily pressed with upper molds 4 and 5 of sheet-shaped structure 3, is pressed with yet another upper mold (not shown) and is actually pressed by the pressing force controlled to increase to P4 and P5 at the spots which have been temporarily pressed with upper molds 4 and 5. Thus, a whole part of sheet-shaped structure 3 to be formed is pressed by a predetermined pressing pressure to be formed into a desired shape. At this time, the whole part can be formed into a desired shape with a high accuracy without defects such as wrinkles since it is formed as a whole in a condition where the raise and wrinkling are prevented as described above. Fig. 2 shows an example of desirable formed shape 11 thus achieved.

### Industrial Applications of the Invention

The method for manufacturing a preform according to the present invention is particularly suitable for manufacturing a preform used for the RTM forming method.

### Explanation of symbols

1: lower mold
2: recessed section
3: sheet-shaped structure
4, 5, 6: upper mold
11: desirable formed shape

## Claims

1. A method for manufacturing a preform, wherein a sheet-shaped structure made of a reinforcing-fiber base material with reinforcing fibers arranged in a predetermined direction is formed into a shape along a lower mold having a three-dimensional shape with a recessed section by using the lower mold and a plurality of upper molds each having a pressing mechanism, **characterized in that** the sheet-shaped structure is placed on the lower mold while at least one spot in the sheet-shaped structure is temporarily pressed with at least one of the upper molds, and at least one spot other than the temporarily pressed spot in the sheet-shaped structure is pressed with another upper mold, and then a spot which is neither the temporarily pressed spot nor the pressed spot is pressed with yet another upper mold, and the spot which has been temporarily pressed with the upper mold is actually pressed by a predetermined pressing force.

2. The method for manufacturing a preform according to claim 1, wherein the sheet-shaped structure is temporarily pressed with said at least one of the upper molds at a periphery of the recessed section of the lower mold.

3. The method for manufacturing a preform according to claim 1 or 2, wherein a spot located on the recessed section of the lower mold in the sheet-shaped structure is pressed with said another upper mold, after the temporary pressing.

4. The method for manufacturing a preform according to any of claims 1 to 3, wherein the pressing force of the upper mold for the temporary pressing is controlled in two phases of the pressing force for the temporary pressing and the pressing force for the actual pressing.

5. The method for manufacturing a preform according to any of claims 1 to 4, wherein at least one upper mold other than the upper mold for the temporary pressing is located closely to the lower mold.

6. The method for manufacturing a preform according to any of claims 1 to 5, wherein the reinforcing-fiber base material composing the sheet-shaped structure comprises a reinforcing-fiber fabric.

7. The method for manufacturing a preform according to any of claims 1 to 6, wherein the reinforcing-fiber base material composing the sheet-shaped structure comprises a carbon fiber base material.

8. The method for manufacturing a preform according to any of claims 1 to 7, wherein the sheet-shaped structure comprises a layered body of the reinforcing-fiber base material.

9. The method for manufacturing a preform according to any of claims 1 to 8, wherein the preform used for the RTM forming method is manufactured.
